# EUROPÄISCHE PATENTSCHRIFT

(11) **EP 1 617 075 B1**
(45) Veröffentlichungstag und Bekanntmachung des Hinweises auf die Patenterteilung: **10.12.2008**
(21) Anmeldenummer: 04016387.5
(22) Anmeldetag: 13.07.2004
(51) Int. Cl.: F03D 1/00

(54) **Verfahren und Vorrichtung zum Getriebetausch bei einer Windkraftanlage**
Method and apparatus for changing a gearbox of a wind turbine
Procédé et dispositif pour le remplacement de la transmission dans une éolienne

(43) Veröffentlichungstag der Anmeldung: 18.01.2006
(73) Patentinhaber: Eickhoff Maschinenfabrik GmbH, 44789 Bochum (DE)
(72) Erfinder: Albers, Helmut, 59439 Holzwickede (DE); Aust, Rainer, 44879 Bochum (DE); Brusinski, Günter, 44799 Bochum (DE); Dombrowski, Wolfhard, 44894 Bochum (DE); Neufelder, Marc, 58452 Witten (DE); Sikora, Carsten, 58089 Hagen (DE)
(74) Vertreter: Behrendt, Arne

(56) Entgegenhaltungen:
- EP-A- 1 291 521
- US-A- 158 976
- US-A1- 2004 041 407

## Beschreibung

Die vorliegende Erfindung betrifft ein Verfahren zum Austausch eines Getriebes einer Windkraftanlage, wobei die Windkraftanlage eine Rotorwelle umfasst, die einen Rotor mit dem auszutauschenden Getriebe verbindet und die mittels eines rotorseitigen Rotorlagers in einem Maschinenrahmen drehbar gelagert ist, und wobei die Rotorwelle während des Getriebetausches mittels einer getriebeseitigen Abstützung an dem Maschinenrahmen abgestützt ist, so dass während des Getriebetausches ein Verbleiben des Rotors an der Rotorwelle gestattet ist.

Ferner betrifft die Erfindung eine als Joch bezeichnete Vorrichtung zum Austausch des Getriebes einer Windkraftanlage oder zur Durchführung von Wartungsarbeiten an dem Tribstrang einer Windkraftanlage.

In der EP 1 101 936 A2 wird ein Verfahren zur Montage und zum Austausch von Hauptkomponenten in der Gondel einer Windkraftanlage offenbart. Seine Durchführung setzt einerseits einen modularisierten Triebstang und anderseits die Ausführung des Maschinenrahmens als eine bestimmte Fachwerkstruktur voraus. Die Hauptkomponenten, so auch das Getriebe, sind einzeln an unteren Längsträgern der Fachwerkstruktur befestigt. Auf den oberen Traversen des Fachwerks ist eine Laufkatze platziert, mittels welcher die Komponenten des Triebstranges einzeln herab oder empor gehoben werden können. Vorteilhafterweise entfällt durch die Verwendung der Laufkatze die Anmietung eines externen Mobilkranes, wenn das Getriebe bei der in der EP 1 101 936 A2 beschriebenen Windkraftanlage ausgetauscht werden muss.

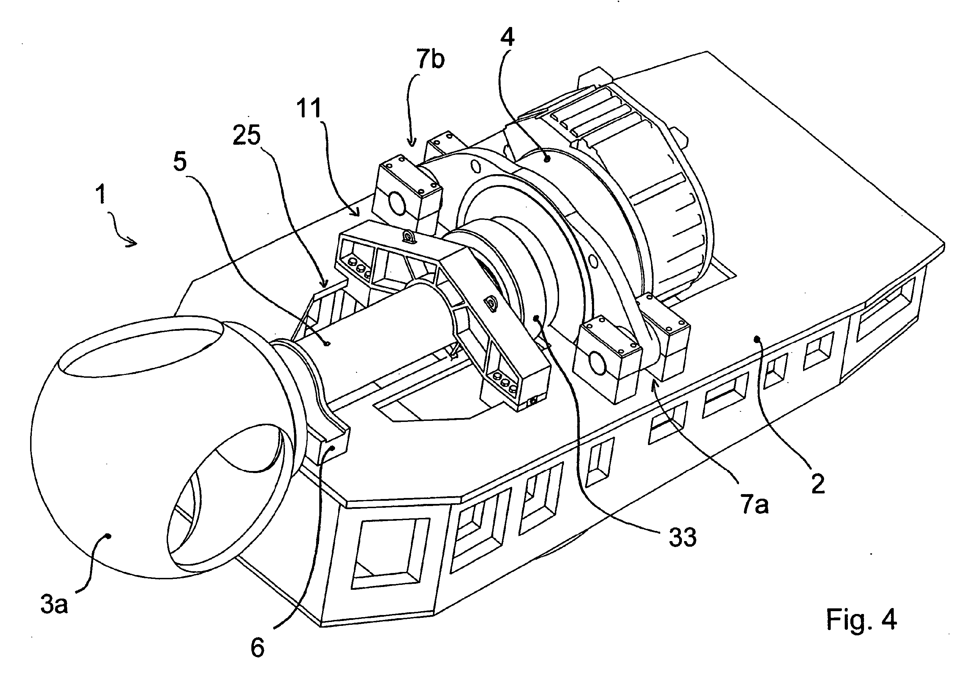

Auch ist bei dieser Windkraftanlage während des Getriebetausches ein Verbleiben des Rotors auf der Rotorwelle gestattet. Letztere ist nämlich an zwei Punkten gelagert, rotorseitig in einem vorderen Rotorlager und getriebeseitig in einem hinteren Rotorlager. Das hintere Rotorlager nimmt das Moment auf, welches aus der Gewichtskraft des Rotors und der Stützweite der Rotorwelle resultiert. So fungiert das hintere Rotorlager als Abstützung, weswegen während eines Getriebetausches der Rotor an der Rotorwelle verbleiben kann, ohne dass das vordere Rotorlager ausbricht. Eine solche Situation ist in Figur 4 der vorgenannten Patentanmeldung gezeigt.

In jüngster Zeit werden mit auffälliger Häufigkeit Schäden an Windkraftanlagen bekannt, die möglicherweise auf Unsicherheiten in der Dimensionierung und der Betriebsführung zurückzuführen sind. Die Schäden betreffen unter anderem die Getriebe, die als Kernstück des Triebstrangs zwischen Rotor und Generator eingespannt und damit allseits negativen Einflüssen ausgesetzt sind. Die Konsequenz sind vorzeitige Ermüdung oder gar Totalausfall einzelner Komponenten der Getriebe wie insbesondere Räder und Lager. Bei besonders schweren Schadensfällen muss das gesamte Getriebe der Windkraftanlage ausgetauscht werden, da der Austausch einzelner beschädigter Komponenten des Getriebes unwirtschaftlich ist.

Sofern die Gondel der Windkraftanlage mit auszutauschendem Getriebe so gestaltet ist, wie es die vorgenannte Patentanmeldung vorschlägt, ist es dank des fachwerkartigen Maschinenrahmens und des modularen Aufbau des Triebstangs ohne weiteres möglich, das geschädigte Getriebe auszutauschen. Allerdings ist die Mehrzahl der bestehenden und besonders ausfallgefährdeten Windkraftanlagen nach einer anderen Lagerkonzeption gebaut, nämlich nach der so genannten Dreipunkt-Lagerung. Bei der Dreipunkt-Lagerung wird auf ein hinteres, getriebeseitiges Rotorlager verzichtet und stattdessen die Rotorwelle endseitig in dem Gehäuse des Getriebes gelagert. Das Getriebegehäuse ist wiederum über zwei Getriebestützen in dem Maschinenrahmen gelagert, die Getriebestützen sind beiderseits des Triebstrangs angeordnet. Da die Rotorwelle letztendlich in dem vorderen, rotorseitigen Rotorlager und in den beiden seitlichen Getriebestützen gelagert ist, spricht man von Dreipunkt-Lagerung.

Grundlegende Informationen zu unterschiedlichen Lagerkonzepten für die Rotorwelle einer Windkraftanlage finden sich in: Hau, Erich. Windkraftanlagen: Grundlagen, Technik, Einsatz, Wirtschaftlichkeit, Berlin, u. a., 3. Auflage 2003, Seiten 277 bis 283. Ein Triebstrang einer Windkraftanlage mit Dreipunkt-Lagerung ist auch in der Figur 1 der EP 1 101 936 A2 als Stand der Technik dargestellt.

Einer Windkraftanlage mit Dreipunkt-Lagerung kann das Getriebe nicht ohne weiteres entnommen werden: Da mit dem Getriebe die hintere Abstützung der Rotorwelle zwangsläufig entfernt wird, wäre diese nur noch in dem vorderen Rotorlager gelagert. Das vordere Rotorlager könnte das aus dem hohen Gewicht des Rotors resultierende Moment nicht halten, was ein Ausbrechen des Rotorlagers und ungünstigenfalls ein Herabstürzen des Rotors zur Folge hätte. Aus diesem Grunde muss bei Windkraftanlagen mit Dreipunkt-Lagerung zunächst der Rotor von der Rotorwelle entfernt und anschließend das Getriebe ausgetauscht werden. Auch bei der Erstmontage einer Windkraftanlage mit Dreipunkt-Lagerung wird der Rotor nach dem Getriebe montiert.

Das Abnehmen des Rotors ist stets mit besonderen Schwierigkeiten und hohen Kosten verbunden. Hierfür sind nämlich zwei Mobilkräne erforderlich, von denen der eine die abgeschlagene Nabe anhebt und der andere den Rotor in eine horizontale Position umschwenkt, damit er auf dem Boden abgelegt werden kann. Sofern lediglich ein Mobilkran zur Verfügung steht, müssten die Rotorblätter nacheinander von der Nabe abgelöst und einzeln herabgelassen werden. Erst danach kann die Nabe entfernt werden. Angesichts der großen Zahl von Dreipunkt-gelagerten Windkraftanlagen, bei denen aufgrund von vorzeitigem Verschleiß ein Getriebetausch notwendig ist, erscheinen die vorbeschriebenen Verfahren zum Austausch des Getriebes als unwirtschaftlich.

Der vorliegenden Erfindung liegt daher die Aufgabe zugrunde, ein Verfahren zum Austausch des Getriebes einer Windkraftanlage nach der eingangs genannten Art so weiterzubilden, dass es auch auf bestehende Windkraftanlagen mit beliebiger Ausführung des Maschinenrahmens und beliebiger Lagerkonzeption anwendbar ist.

Gelöst wird diese Aufgabe dadurch, dass als Abstützung ein Joch verwendet wird, welches unmittelbar vor dem Getriebetausch zwischen Rotorwelle und Maschinenrahmen montiert und unmittelbar nach dem Getriebetausch wieder entfernt wird, und dass die Rotorwelle an dem Joch festgesetzt wird.

In der eben geschilderten Weise ist es erstmalig möglich, das beschädigte Getriebe einer Windkraftanlage auszutauschen, deren Rotorwelle zumindest teilweise im Gehäuse des Getriebes gelagert ist, ohne auf das Abnehmen des Rotors angewiesen zu sein. Die Kosten für die Demontage des beschädigten Getriebes und die Remontage des Austausch-Getriebes können durch das vorgeschlagene Verfahren nach ersten Schätzungen um bis zu 40% gesenkt werden.

Insbesondere eignet sich das Verfahren für Windkraftanlagen mit Dreipunkt-Lagerung, also dem Lagerkonzept, bei welchem die Rotorwelle ausschließlich in dem vorderen, rotorseitigen Rotorlager und dem beidseitig abgestützten Getriebe drehbar gelagert ist.

Das Festsetzen der Rotorwelle an dem Joch erfolgt bevorzugt durch eine Schelle und verhindert, dass der Rotor eine Aufwärts-Nickbewegung ausführen und in Folge dessen die Rotorwelle aus dem Joch rutschen kann. Ebenso kann durch diese Maßnahme eine zusätzliche Sicherung gegen Verdrehen der Rotorwelle ermöglicht werden. Es muss nämlich sichergestellt sein, dass sich der Rotor während der Montagearbeiten nicht dreht. Dies wird in der Regel durch Einrasten der Rotorarretierung erreicht, mit welchen die meisten Windkraftanlagen ausgerüstet sind. Es ist jedoch nicht auszuschließen, dass die Rotorarretierung versagt, in diesem Fall kann eine zusätzliche Sicherheit durch die drehfeste Verbindung zwischen Rotorwelle und Joch erreicht werden.

Ein Joch, welches vorzüglich für die Durchführung des erfindungsgemäßen Verfahrens taugt, aber auch im Rahmen von anderen Wartungsarbeiten an dem Triebstrang einer Windkraftanlage einsetzen lässt, umfasst eine Schelle, die zweckmäßigerweise über Gewindestangen mit dem Bügel verbindbar ist, so dass eine Rotorwelle zwischen Bucht und Schelle eingelegt und durch Anziehen der Gewindestangen zwischen diesen Bauteilen festklemmbar ist.

Zur Gestaltung des Jochs wird vorgeschlagen, Bucht und Schelle zumindest abschnittsweise entlang der Peripherie eines gedachten Kreises verlaufen zu lassen. Der gedachte Kreis entspricht dabei dem Querschnitt der in der Regel runden Rotorwelle. Es wird weiter angeregt, zwei Gewindestangen vorzusehen, die sich jeweils tangential zu der Peripherie des Kreises erstrecken und Schelle und Bügel miteinander verbinden. Die tangentiale Anordnung der Gewindestangen führt zu einer gleichmäßigen Kraftverteilung am Umfang der Rotorwelle. Die Verbindung zwischen den Gewindestangen und dem Bügel bzw. der Schelle erfolgt einfachstenfalls mittels Muttergewinde, in welche die Gewindestangen eingeschraubt werden. Das Muttergewinde kann jeweils in das Joch oder die Schelle als Gewindebohrung eingeschnitten sein oder einfacher in Form einer Mutter vorgesehen werden. Anstelle von Gewindestangen können gegebenenfalls auch lange Schrauben verwendet werden. Dessen Köpfe würden dann auf einer Seite das Muttergewinde ersetzen.

Um sicher zu gehen, dass die Rotorwelle durch das Einspannen nicht beschädigt wird, sollten Bucht und Schelle an ihren Innenseiten mit einem Polsterbelag belegt werden. Oberflächliche Beschädigungen üben vor allem auf Wellen eine erhebliche Kerbwirkung aus, die wie Rotorwellen wechselnder Torsionsbelastung ausgesetzt sind.

Als Polsterbelag verwendet man günstigenfalls eine Kunststoffschicht, vorzugsweise aus Polyamid. Dieser Kunststoff ist recht preisgünstig und kann gut verarbeitet werden. Zudem ist er im Vergleich zu Stahl in einem hohen Maße verformbar, so dass er Maßabweichungen und Ausrichtungsfehler ausgleichen kann.

Zur einfachen und schnellen Montage des Jochs wird vorgeschlagen, den Bügel jeweils endseitig mit einem Fuß zu versehen, der jeweils eine nach unten gewandte Sohle aufweist. An diesen Sohlen ist jeweils ein Klemmschuh festzuschrauben, der seinerseits an dem Maschinenrahmen befestigt wird. Zur Montage des Jochs werden zunächst die beiden Klemmschuhe beiderseits der Rotorwelle an dem Maschinenrahmen befestigt und anschließend der Bügel von oben über die Welle auf die Klemmschuhe herabgesenkt. Nach Verschrauben der Sohlen mit den Klemmschuhen sitzt der Bügel fest, so dass nur noch die Schelle montiert werden muss.

Der Klemmschuh nimmt eine "Adapterfunktion" wahr, um das Joch auf unterschiedliche Maschinenrahmen anpassen zu können. Die Gestaltung des Klemmschuhs wird somit durch die Geometrie des Maschinenrahmens bestimmt. Viele Maschinenrahmen sind aus verschweißten Stahlplatten zusammengesetzt, die an ihren Stoßstellen überstehen. Auch gegossene Maschinenrahmen weisen solche Überstände auf. Zum Anbinden des Jochs am Maschinenrahmen mit Überständen empfiehlt es sich, den Klemmschuh U-förmig auszubilden, so dass er zwei Schenkel aufweist, zwischen denen ein Bestandteil eines Maschinenrahmens, wie beispielsweise eine überstehende Stahlplatte, festklemmbar ist.

Alternativ zu U-förmigen Klemmschuhen können auch T-förmige Klemmschuhe eingesetzt werden. Vor allem an gegossenen Maschinenrahmen mit Ober- und Untergurt lassen sich T-förmige Klemmschuhe vorzüglich zwischen den Gurten anbringen.

Der wesentliche Vorteil in der Verwendung der Klemmschuhe besteht darin, dass der Maschinenrahmen keine zusätzliche mechanische Bearbeitung aufweisen muss, um das Joch befestigen zu können. Es ist nämlich davon auszugehen, dass solche speziellen Bearbeitungen in der Regel nicht an dem Maschinenrahmen vorhanden sind.

Das Festklemmen des Klemmschuhs an dem Maschinenrahmen geschieht einfachstenfalls mit einer Befestigungsschraube.

Vorteilhafterweise wird das Joch mit einer Höheneinstellung versehen. Eine Höheneinstellung ist bei einigen Anlagen notwendig, um zum einen die möglichen Abweichungen des Maschinenrahmens zur Rotorwellenachse auszugleichen, zum anderen aber auch den Triebstrang anheben zu können, um eine unter Umständen notwendige Montagefreiheit zu erzielen.

Zur Höhenverstellung eignet sich vorzugsweise eine Keilanordnung. Eine solche umfasst eine schiefe Ebene, die in den sohlenseitigen Schenkel des Klemmschuhs eingearbeitet ist, einen Keil, der einerseits an der Sohle des Bügels und andererseits an der schiefen Ebene anliegt und ein Bolzen, mittels welchem der Keil zwischen den von Sohle und schiefer Ebene begrenzten Raum eintreibbar ist. Das Eintreiben des Keils wird am besten durch einen (Gewinde-)Bolzen bewerkstelligt, der durch Anziehen den Keil entlang der schiefen Ebene gegen die Sohle treibt.

Die Höhenverstellung erfolgt gleichmäßiger mit Hilfe von zwei Keilen, die auf zwei gegeneinander ansteigenden, schiefen Ebenen aufeinander zugetrieben werden. Bei der Höhenverstellung mittels Keilen entsteht ein Spalt zwischen Sohle und Klemmschuh; das Gewicht des Bügels lastet einzig auf den Keilen. Damit die zulässige Flächenpressungen des Keil und der Sohle beim Festschrauben des Klemmschuhs nicht überschritten werden, sollte der Spalt mit Futterblechen aufgefüllt werden.

Das erfindungsgemäße Verfahren sowie ein Ausführungsbeispiel des für das Verfahren bevorzugt zu verwendende Joch soll nun beschrieben und mit den Figurenzeichnungen illustriert werden. Es zeigen:
- Fig. 1:: Triebstrang einer Windkraftanlage mit Dreipunkt-Lagerung in perspektivischer Ansicht (Stand der Technik);
- Fig. 2a bis e:: Getriebetausch, symbolisch dargestellt;
- Fig. 3:: Joch;
- Fig. 4:: Triebstrang aus Figur 1 mit Joch.

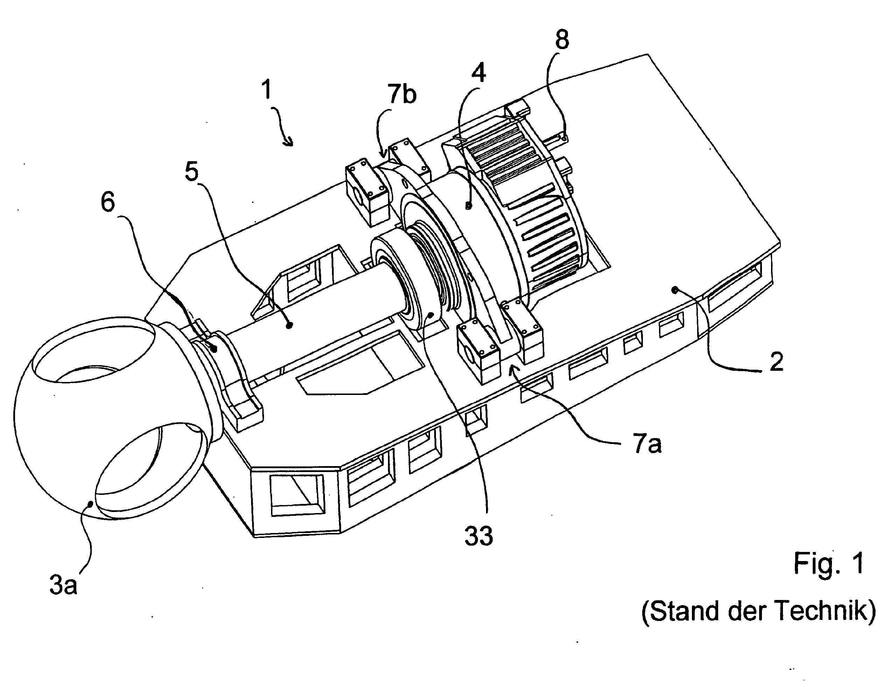

Figur 1 zeigt den "langsamen" Abschnitt des Triebstrangs einer typischen Windkraftanlage der 1.5 MW-Klasse mit Dreipunkt-Lagerung. Der Triebstrang 1 ist in einem Maschinenrahmen 2 drehbar gelagert und erstreckt sich von einer Rotornabe 3a bis zu einem hier nicht dargestellten Generator. Der Rotor ist in Figur 1 nicht komplett dargestellt, er umfasst neben der Rotornabe 3a drei Rotorblätter, die an der Rotornabe 3a befestigt sind und sich radial von ihr fort erstrecken.

Kernstück des Triebstrangs 1 ist ein Getriebe 4, welches über eine Rotorwelle 5 mit der Rotornabe 3a verbunden ist. Die Rotorwelle 5 ist rotorseitig in einem Rotorlager 6 gelagert. Getriebeseitig ist die Rotorwelle 5 in dem Gehäuse des Getriebes 4 drehbar gelagert, welches wiederum über zwei Getriebestützen 7a, 7b im Maschinenrahmen 2 gelagert ist. Rotorlager 6 und die beiden Getriebestützen 7a, 7b bilden zusammen die Dreipunkt-Lagerung. Eine Generatorwelle 8 verlässt das Getriebe 4 abtriebseitig und ist markiert den Beginn des "schnellen" Abschnitts des Triebstangs 1, der sich zwischen Getriebe 4 und Generator erstreckt.

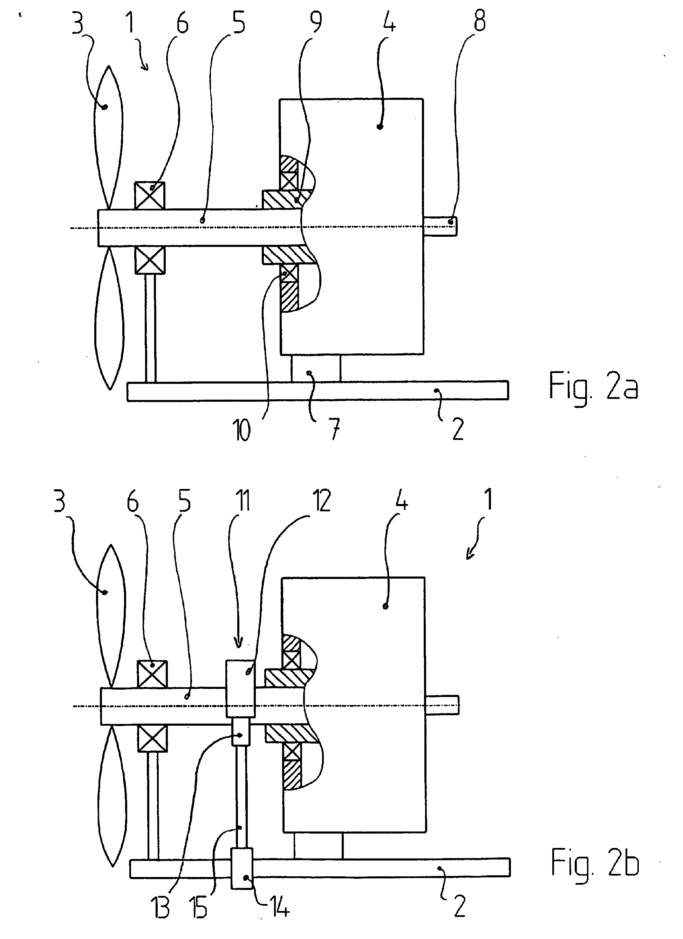

In Figur 2a ist derselbe Triebstrang 1 symbolisch dargestellt. Hierbei wurde auf die Symbolisierung der Rotornabe verzichtet, an Stelle dessen sind Rotorblätter des Rotors 3 direkt auf der Rotorwelle 5 befestigt angedeutet. Die Getriebestützen 7a, 7b sind vereinfachend als eine einheitliche Getriebestütze 7 dargestellt. Der Aufbruch im Getriebe 4 lässt erkennen, dass die Rotorwelle 5 in einem Planetenträger 9 des Getriebes mündet. Der Planetenträger 9 ist das Antriebsglied des Getriebes 4 und seinerseits in einem Planetenträgerlager 10 im Gehäuse des Getriebes 4 gelagert. Die getriebeseitige Lagerung der Rotorwelle 5 ergibt sich folglich aus dem Planetenträger 9, dem Planetenträgerlager 10, dem Gehäuse des Getriebes 4 und der Getriebestütze 7. Bei konkreten Windkraftanlagen sind Rotorwelle 5 und Planetenträger 9 über eine in den symbolischen Zeichnungen nicht dargestellte Spannscheibe, auch Schrumpfscheibe genannt, lösbar miteinander verbunden.

Bevor das Getriebe 4 ausgetauscht werden kann, wird ein Joch 11 zwischen Rotorwelle 5 und Maschinenrahmen 2 eingesetzt; vgl. Figur 2b. Das Joch 11 umfasst unter anderem einen Bügel 12, eine Schelle 13 und einen Klemmschuh 14, der an einem Fuß 15 des Jochs 11 festgesetzt ist. Die Rotorwelle 5 wird zwischen Bügel 12 und Schelle 13 festgesetzt, der Klemmschuh 14 an dem Maschinenrahmen 2 befestigt. Das Joch 11 wird in der folgenden Reihenfolge montiert: Klemmschuhe 14 an dem Maschinenrahmen 2, Bügel 12 auf den Klemmschuhen 14, Schelle 13 an dem Bügel 12.

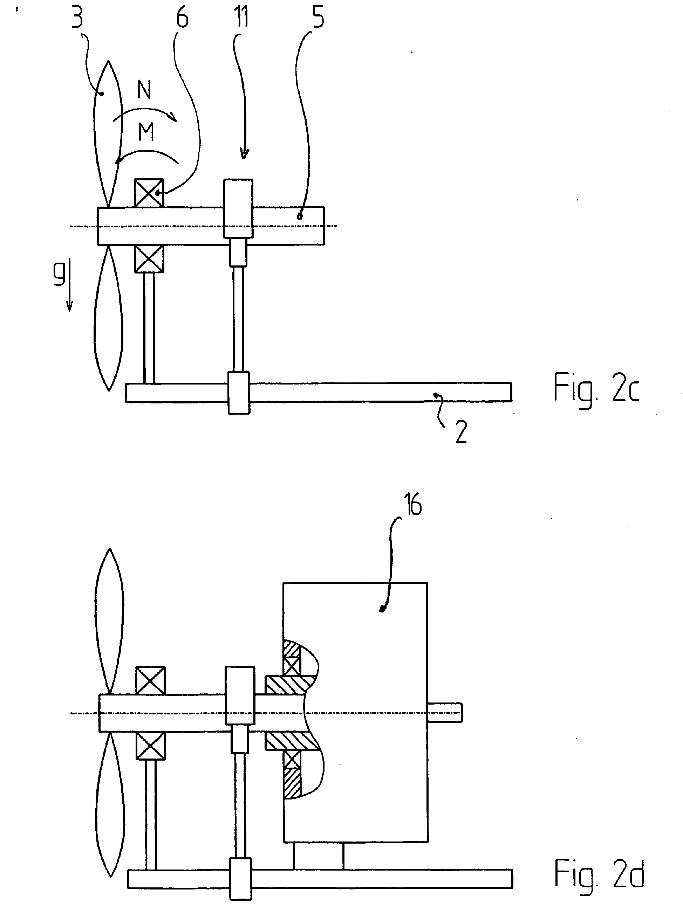

Nach Montage des Jochs 11 (Figur 2b) wird der nicht dargestellte "schnelle" Abschnitt des Triebstranges jenseits der Generatorwelle 8 abgeschlagen. Dann wird die nicht symbolisierte Spannscheibe zwischen Rotorwelle 5 und Planetenträger 9 sowie die Getriebestütze 7 zwischen dem Gehäuse des Getriebes 4 und dem Maschinenrahmen 2 gelöst. Alsdann wird das Getriebe 4 mit einem Kran aus der Windkraftanlage entnommen, s. hierzu Figur 2c. Das Moment M, welches der Rotor 3 in Folge der Gravitation g auf die Rotorwelle 5 ausübt, wird über das Joch 11 auf den Maschinenrahmen 2 abgestützt. Somit wird verhindert, dass die Rotorwelle 5 aus dem Rotorlager 6 ausbricht. Da Bügel 12 und Schelle 13 die Rotorwelle 5 allseitig umschließen, werden auch Momente N über das Joch 11 in dem Maschinenrahmen 2 eingeleitet, die aus einer aufwärts gerichteten Nickbewegung des Rotors 3 resultieren. Darüber hinaus unterstützt das Joch 11 mittels Bügel 12 und Schelle 13 eine nicht dargestellte Rotorarretierung, so dass der Rotor 3 nicht ungewollt drehen kann.

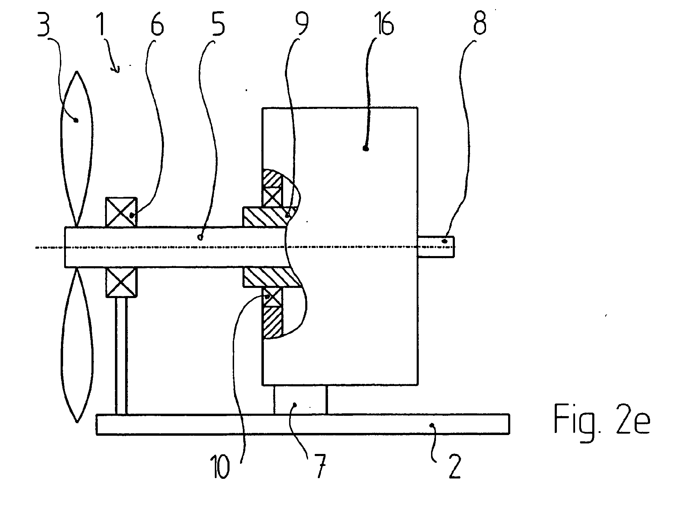

In Figur 2d wurde ein Austausch-Getriebe 16 im Triebstrang 1 eingesetzt. Dieses wird wiederum über die Spannscheibe mit der Rotorwelle 5 und über die Getriebestützen 7 mit dem Maschinenrahmen 2 verbunden. Nach erfolgter Montage des Austauschgetriebes 16 kann das Joch 11 - wie in Figur 2e gezeigt - entfernt werden. Die Generatorwelle 8 wird wieder an den "schnellen" Abschnitt des Triebstranges 1 angeschlossen.

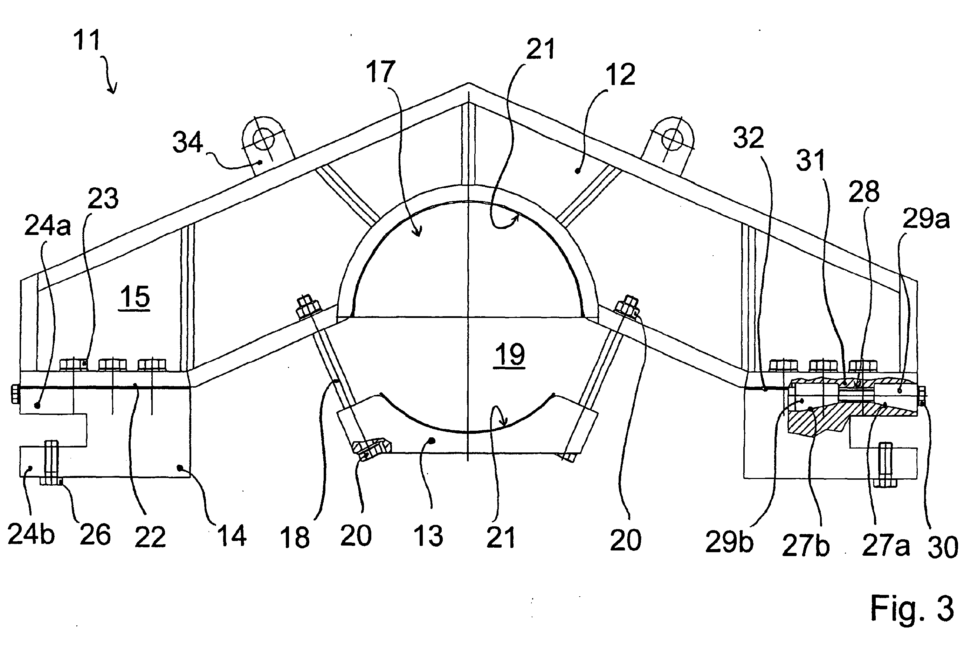

Figur 3 zeigt eine bevorzugte Ausführungsform des Jochs 11. Hauptbestandteil des Jochs 11 ist sein Bügel 12. Der Bügel 12 ist als verrippte Schweißkonstruktion aus Stahlplatten ausgeführt. Mittig weist er eine halbkreisförmige Bucht 17 auf, deren Innenseite aus halbzylindrischen Rohrabschnitt besteht. Konzentrisch zu der Innenseite der Bucht 17 verläuft die Innenseite der Schelle 13, welche über Gewindestangen 18 mit dem Bügel 12 verbunden ist. Die Innenseiten der Bucht 17 und der Schelle 13 verlaufen somit abschnittsweise entlang der Peripherie eines gedachten Kreises 19, welcher den Querschnitt der Rotorwelle 5 beschreibt. Die Gewindestangen 18 erstrecken sich tangential zu diesem Kreis 19. Beidseitig sind sie durch Durchgangslöcher in Schelle 13 und Bügel 12 hindurchgesteckt und in Muttergewinde 20 eingeschraubt. Selbstverständlich ist es auch möglich, an Stelle einer Gewindestange eine lange Schraube zu verwenden, die dementsprechend nur einseitig in ein Muttergewinde eingeschraubt wird und an der anderen Seite mit ihrem Kopf an dem dort befindlichen Bauteil anliegt. Durch Anziehen der Muttergewinde 20 kann eine zwischen Bucht 17 und Schelle 13 eingelegte Rotorwelle in dem Joch 11 festgeklemmt werden. Sofern die Gewindestangen 18 wie in dem vorgestellten Ausführungsbeispiel nicht einseitig gelenkig gelagert sind, werden sich diese beim Anziehen entsprechend verformen. Damit die Rotorwelle beim Festsetzen nicht an ihren Oberflächen durch metallischen Kontakt mit Schelle 13 oder Bucht 17 beschädigt wird, werden deren Innenseiten mit einem Polsterbelag 21 aus Polyamid oder einem anderen geeigneten Kunststoff verkleidet. Das Polyamid gleicht auch mögliche belastungsbedingte Formänderungen der Schelle 13 aus.

Jeweils endseitig weist der Bügel 12 einen als Fuß 15 zu bezeichnenden Bereich auf, an deren Unterseiten sich jeweils eine Sohle 22 erstreckt. Mittels Schrauben 23 kann ein in diesem Ausführungsbeispiel U-förmig gestalteter Klemmschuh 14 an der Sohle 22 befestigt werden. Der Klemmschuh 14 weist aufgrund seiner U-Form zwei Schenkel 24a, 24b auf, die dafür bestimmt sind, einen Überstand-artigen Bestandteil 25 des Maschinenrahmens 2 zu umschließen und ihn über Befestigungsschrauben 26 einzuklemmen.

Zur Höhenverstellung des Bügels 12 sind in dem sohlenseitigen Schenkel 24a des Klemmschuhs 14 zwei schiefe Ebenen 27a, 27b eingearbeitet, die aufeinander zu ansteigen. Zusammen mit den Innenflächen des sohlenseitigen Schenkels 24a und der Sohle 22 begrenzen die schiefen Ebenen 27a, 27b einen Raum 28. In diesen Raum 28 können durch Anziehen eines Bolzens 30 Keile 29a, 29b eingetrieben werden. Damit die beiden Keile 29a, 29b entlang der schiefen Ebenen 27a, 27b aufeinander zu bewegt werden können, ist der innere Keil 29b mit einem Gewinde versehen, in welchem ein Gewinde des Bolzens 30 eingeschraubt ist. Der äußere Keil 29a hingegen verfügt über eine gewindefreie Durchgangsbohrung, durch welche der Schaft des Bolzens 30 hindurchgesteckt ist.

Beim Anziehen des Bolzens 30 bewegen sich die Keile 29a und 29b aufeinander zu und heben über den Bügel 12 und die Schelle 13 die Rotorwelle 5 an. Die Höhenverstellung wird durch einen Vorsprung 31 begrenzt, an den die Keile 29a, 29b letztendlich anschlagen. Nach erfolgter Höheneinstellung werden Futterbleche 32 zwischen Sohle 22 und Oberseite des Klemmschuhs 14 eingelegt. Durch Festziehen der Schrauben 23 wird der Bügel 12 fest mit dem Klemmschuh 14 verbunden.

Es ist auch möglich, auf den inneren Keil 29b zu verzichten und den Bolzen 30 stattdessen in ein Gewinde einzuschrauben, welches sich durch den Vorsprung 31 erstrecken müsste. Der einfach wirkende Keil 29a würde eine entsprechend höheres Anzugsmoment für den Bolzen 30 erfordern. Ebenso ist es denkbar, an Stelle eines U-förmigen Klemmschuhs 14 eine andere Ausführungsform, wie zum Beispiel eine T-förmige zu wählen, die an die Geometrie des Maschinenrahmens 2 angepasst ist.

Figur 4 zeigt den aus Figur 1 bekannten Abschnitt des Triebstrangs 1 einer Windkraftanlage mit montiertem Joch 11 in der soeben dargestellten Ausführungsform. Bisher unerwähnt bleib die hier gezeichnete Spannscheibe 33, welche die Rotorwelle 5 lösbar mit dem Planetenträger 9 verbindet.

Das Joch 11 wird wie folgt montiert: Zunächst werden die Klemmschuhe 14 auf dem jeweiligen Bestandteil des Maschinenrahmens aufgeschoben und durch Anziehen der Befestigungsschrauben 26 auf dem Maschinenrahmen festgesetzt. Anschließend wird der Bügel 12 auf die Rotorwelle 5 herabgelassen, so dass er mit den Sohlen 22 auf den Klemmschuhen 14 zu liegen kommt. Beim Einschwenken des Bügels 12 helfen Kranösen 34. Alsdann wird unterhalb der Rotorwelle 5 die Schelle 13 angesetzt und über die Gewindestangen 18 mit dem Bügel 12 verbunden. Danach wird über das Anziehen des Bolzens 30 die Höheneinstellung vorgenommen und der dabei entstehende Spalt zwischen Sohle 22 und Klemmschuh 14 mit den Futterblechen 32 verfüllt. Nach Einlegen der Futterbleche 32 wird durch Festziehen der Schrauben 23 der Bügel 12 an seinen Füßen 15 mit den Klemmschuhen 14 fest verbunden. Das Joch 11 ist nun komplett montiert und kann die sonst über die Getriebestützen 7a, 7b an den Maschinenrahmen 2 weitergegebenen Gewichtsmomente des Rotors abstützen. Das Joch 11 macht es möglich, das Getriebe 4 komplett zu entfernen, ohne zuvor die Rotornabe 3a abnehmen zu müssen. Nach Montage des Austausch-Getriebes 16 wird das Joch 11 wieder entfernt.

## Patentansprüche

1. Verfahren zum Austausch eines Getriebes (4) einer Windkraftanlage, wobei die Windkraftanlage eine Rotorwelle (5) umfasst, die einen Rotor (3) mit dem auszutauschenden Getriebe (4) verbindet und die mittels eines rotorseitigen Rotorlagers (6) in einem Maschinenrahmen (2) drehbar gelagert ist, und wobei die Rotorwelle (5) während des Getriebetausches mittels einer getriebeseitigen Abstützung an dem Maschinenrahmen (2) abgestützt ist, so dass während des Getriebetausches ein Verbleiben des Rotors (3) an der Rotorwelle (5) gestattet ist, **dadurch gekennzeichnet, dass** es sich bei der Abstützung um ein Joch (11) handelt, welches unmittelbar vor dem Getriebetausch zwischen Rotorwelle (5) und Maschinenrahmen (2) montiert und unmittelbar nach dem Getriebetausch wieder entfernt wird, und dass die Rotorwelle (5) an dem Joch (11) festgesetzt wird.

2. Vorrichtung zum Austausch des Getriebes einer Windkraftanlage oder zur Durchführung von Wartungsarbeiten an dem Triebstrang einer Windkraftanlage, genannt Joch (11), mit einem Bügel (12), der mittig eine Bucht (17) aufweist, und mit einer Schelle (13), die mittels Gewindestangen (18) mit dem Bügel (12) verbindbar ist, dergestalt, dass eine zwischen Bucht (17) und Schelle (13) befindliche Rotorwelle (5) durch Anziehen der Gewindestangen (18) zwischen Bucht (17) und Schelle (13) festklemmbar ist.

3. Joch (11) nach Anspruch 2, **dadurch gekennzeichnet, dass** das Joch (11) mindestens zwei Gewindestangen (18) umfasst, wobei jede Gewindestange (18) einerseits in ein am Bügel (12) angeordnetes Muttergewinde (20) und andererseits in ein an der Schelle (13) angeordnetes Muttergewinde (20) einschraubbar ist, und wobei sich jede Gewindestange (18) tangential zu einem Kreis (19) erstreckt, dessen Peripherie zumindest abschnittsweise entlang der Bucht (17) und entlang der Schelle (13) verläuft.

4. Joch (11) nach Anspruch 2 oder 3, **dadurch gekennzeichnet, dass** die Bucht (17) und die Schelle (13) an ihren Innenseiten mit einem Polsterbelag (21) belegt sind.

5. Joch (11) nach Anspruch 4, **dadurch gekennzeichnet, dass** es sich bei dem Polsterbelag (21) um eine Kunststoffschicht, insbesondere aus Polyamid handelt.

6. Joch (11) nach einem der Ansprüche 2 bis 5, **dadurch gekennzeichnet, dass** der Bügel (12) endseitig jeweils einen Fuß (15) mit einer nach unten gewandten Sohle (22) aufweist, an welcher ein Klemmschuh (14) festschraubbar ist.

7. Joch (11) nach Anspruch 6, **dadurch gekennzeichnet, dass** der Klemmschuh (14) U-förmig ausgebildet ist und mithin zwei Schenkel (24a, 24b) aufweist, zwischen denen ein Bestandteil (25) eines Maschinenrahmens (2) festklemmbar ist.

8. Joch (11) nach Anspruch 6, **dadurch gekennzeichnet, dass** der Klemmschuh (14) T-förmig ausgebildet ist.

9. Joch (11) nach einem der Ansprüche 6 bis 8, **dadurch gekennzeichnet, dass** der Klemmschuh (14) eine Befestigungsschraube (26) aufweist, mittels welcher der Klemmschuh (14) an dem Maschinenrahmen (2) festklemmbar ist.

10. Joch (11) nach einem der Ansprüche 2 bis 9, **gekennzeichnet durch** eine Höhenverstellung.

11. Joch (11) nach Anspruch 10, **dadurch gekennzeichnet, dass** als Höhenverstellung in einem sohlenseitigen Schenkel (24a) des Klemmschuhs (14) mindestens eine schiefe Ebene (27a) eingearbeitet ist, dass der Klemmschuh (14) einen Keil (29a) umfasst, der einerseits an der Sohle (22) und andererseits an der schiefen Ebene (27a) anliegt, und dass der Keil (29a) mittels eines Bolzens (30) in einen von Sohle (22) und schiefer Ebene (27a) begrenzten Raum (28) eintreibbar ist.

12. Joch (11) nach Anspruch 11, **dadurch gekennzeichnet, dass** der Klemmschuh (14) zwei schiefe Ebenen (27a, 27b) und zwei Keile (29a, 29) umfasst, wobei die Keile (29a, 29b) durch Anziehen des Bolzens (30) aufeinander zu treibbar sind.

13. Joch (11) nach Anspruch 11 oder 12, **gekennzeichnet durch** mindestens ein Futterblech (32), welches in einen Spalt zwischen Sohle (22) und Klemmschuh (14) einlegbar ist, der bei Höhenverstellung des Jochs (11) entsteht.

14. Verwendung eines Jochs (11) nach einem der Ansprüche 2 bis 13 in einem Verfahren nach Anspruch 1.

## Claims

1. A method of changing a transmission (4) of a wind power installation, wherein the wind power installation includes a rotor shaft (5) which connects a rotor (3) to the transmission (4) to be changed and which is mounted in a machine frame (2) rotatably by means of a rotor bearing (6) at the rotor side, and wherein the rotor shaft (5) is supported on the machine frame (2) during the transmission change operation by means of a support at the transmission side so that the rotor (3) is permitted to remain on the rotor shaft (5) during the transmission change, **characterised in that** the support is a yoke (11) which is mounted between the rotor shaft (5) and the machine frame (2) immediately prior to the transmission change and is removed again immediately after the transmission change and that the rotor shaft (5) is fixed to the yoke (11).

2. Apparatus for changing the transmission of a wind power installation or for carrying out maintenance operations on the drive train of a wind power installation, referred to as a yoke (11), comprising a saddle bracket (12) which centrally has a recess (17) and a clamp (13) connectable to the saddle bracket (12) by means of screwthreaded rods (18) in such a way that a rotor shaft (5) disposed between the recess (17) and the clamp (13) can be clamped fast between the recess (17) and the clamp (13) by tightening the screwthreaded rods (18).

3. A yoke (11) according to claim 2 **characterised in that** the yoke (11) includes at least two screwthreaded rods (18), wherein each screwthreaded rod (18) can be screwed on the one hand into a nut screwthread (20) arranged on the saddle bracket (12) and on the other hand into a nut screwthread (20) arranged on the clamp (13) and wherein each screwthreaded rod (18) extends tangentially relative to a circle (19), the periphery of which extends at least portion-wise along the recess (17) and along the clamp (13).

4. A yoke (11) according to claim 2 or claim 3 **characterised in that** the recess (17) and the clamp (13) are covered at their insides with a cushion lining (21).

5. A yoke (11) according to claim 4 **characterised in that** the cushion lining (21) is a plastic layer, in particular of polyamide.

6. A yoke (11) according to one of claims 2 to 5 **characterised in that** the saddle bracket (12) has at its ends a respective foot (15) with a downwardly facing base (22) to which a clamping shoe (14) can be screwed fast.

7. A yoke (11) according to claim 6 **characterised in that** the clamping shoe (14) is U-shaped and accordingly has two limbs (24a, 24b), between which a component part (25) of a machine frame (2) can be clamped fast.

8. A yoke (11) according to claim 6 **characterised in that** the clamping shoe (14) is T-shaped.

9. A yoke (11) according to one of claims 6 to 8 **characterised in that** the clamping shoe (14) has a fixing screw (26), by means of which the clamping shoe (14) can be clamped fast to the machine frame (2).

10. A yoke (11) according to one of claims 2 to 9 **characterised by** height adjustment.

11. A yoke (11) according to claim 10 **characterised in that** at least one inclined plane (27a) is incorporated into a limb (24a), at the base side, of the clamping shoe (14) as height adjustment, the clamping shoe (14) includes a wedge (29a) which bears on the one hand against the base (22) and on the other hand against the inclined plane (27a) and the wedge (29a) can be driven by means of a bolt (30) into a space (28) defined by the base (22) and the inclined plane (27a).

12. A yoke (11) according to claim 11 **characterised in that** the clamping shoe (14) includes two inclined planes (27a, 27b) and two wedges (29a, 29b), wherein the wedges (29a, 29b) are drivable towards each other by tightening the bolt (30).

13. A yoke (11) according to claim 11 or claim 12 **characterised by** at least one packing plate (32) which can be introduced into a gap between the base (22) and the clamping shoe (14) which is produced upon height adjustment of the yoke (11).

14. Use of a yoke (11) according to one of claims 2 to 13 in a method according to claim 1.

## Revendications

1. Procédé pour le remplacement d'une transmission (4) d'une éolienne, où l'éolienne comprend un arbre de rotor (5) qui relie un rotor (3) à la transmission (4) à remplacer et qui est logé d'une manière tournante au moyen d'un palier de rotor (6) côté rotor dans un châssis de machine (2), et où l'arbre de rotor (5), pendant le remplacement de la transmission, est supporté au moyen d'un appui, côté transmission, sur le châssis de machine (2) de sorte que pendant le remplacement de la transmission, le maintien du rotor (3) à l'arbre de rotor (5) est permis, **caractérisé en ce que** dans le cas de l'appui, il s'agit d'une travée (11), qui est montée directement avant le remplacement de la transmission entre l'arbre de rotor (5) et le châssis de machine (2) et est retirée directement après le remplacement de la transmission, et **en ce que** l'arbre de rotor (5) est fixé à la travée (11).

2. Dispositif pour le remplacement de la transmission d'une éolienne ou pour exécuter des travaux d'entretien au tronçon moteur d'une éolienne, appelé travée (11), avec une traverse (12) qui présente au milieu un creux (17), et avec une bride (13) qui peut être reliée par des tiges filetées (18) à la traverse (12), de telle sorte qu'un arbre de rotor (5) se trouvant entre le creux (17) et la bride (13) peut être serré par un serrage des tiges filetées (18) entre le creux (17) et la bride (13).

3. Travée (11) selon la revendication 2, **caractérisée en ce que** la travée (11) comprend au moins deux tiges filetées (18), où chaque tige filetée (18) peut être vissée, d'une part, dans un filet femelle (20) disposé à la traverse (12) et, d'autre part, dans un filet femelle (20) disposé à la bride (13), et où chaque tige filetée (18) s'étend tangentiellement à un cercle (19) dont la périphérie s'étend au moins par sections le long du creux (17) et le long de la bride (13).

4. Travée (11) selon la revendication 2 ou 3, **caractérisée en ce que** le creux (17) et la bride (13) sont garnis, à leurs côtés intérieurs, d'un revêtement de rembourrage (21).

5. Travée (11) selon la revendication 4, **caractérisée en ce que** dans le cas du revêtement de rembourrage (21), il s'agit d'une couche de matériau synthétique, en particulier en polyamide.

6. Travée (11) selon l'une des revendications 2 à 5, **caractérisée en ce que** la traverse (12) présente au côté de l'extrémité respectivement un pied (15) avec une semelle (22) dirigée vers le bas, à laquelle peut être vissé un patin de serrage (14).

7. Travée (11) selon la revendication 6, **caractérisée en ce que** le patin de serrage (14) est réalisé en forme de U et présente deux branches (24a, 24b) entre lesquelles un composant (25) d'un châssis de machine (2) peut être serré.

8. Travée (11) selon la revendication 6, **caractérisée en ce que** le patin de serrage (14) est réalisé en forme de T.

9. Travée (11) selon l'une des revendications 6 à 8, **caractérisée en ce que** le patin de serrage (14) présente une vis de fixation (26) au moyen de laquelle le patin de serrage (14) peut être serré au châssis de machine (2).

10. Travée (11) selon l'une des revendications 2 à 9, **caractérisée par** un ajustement en hauteur.

11. Travée (11) selon la revendication 10, **caractérisée en ce que,** comme ajustement en hauteur, dans une branche côté semelle (24a) du patin de serrage (14), au moins un plan incliné (27a) est ménagé, **en ce que** le patin de serrage (14) comprend un coin (29a) qui s'applique, d'une part, à la semelle (22) et, d'autre part, au plan incliné (27a), et **en ce que** le coin (29a) peut être chassé par un boulon (30) dans un espace (28) délimité par la semelle (22) et le plan incliné (27a).

12. Travée (11) selon la revendication 11, **caractérisée en ce que** le patin de serrage (14) comprend deux plans inclinés (27a, 27b) et deux coins (29a, 29b), où les coins (29a, 29b), par un serrage du boulon (30), peuvent être entrainés l'un vers l'autre.

13. Travée (11) selon la revendication 11 ou 12, **caractérisée par** au moins une tôle de fourrure (32) qui peut être placée dans une fente entre la semelle (22) et le patin de serrage (14), qui est produite lors de l'ajustement en hauteur de la travée (11).

14. Utilisation d'une travée (11) selon l'une des revendications 2 à 13 dans un procédé selon la revendication 1.
